# EUROPÄISCHE PATENTSCHRIFT

(11) **EP 4 144 944 B1**
(45) Veröffentlichungstag und Bekanntmachung des Hinweises auf die Patenterteilung: **01.10.2025**
(21) Anmeldenummer: 22188453.9
(22) Anmeldetag: 03.08.2022
(51) Int. Cl.: E05B 71/00, B62H 5/14

(54) **RAHMENSCHLOSS**
FRAME LOCK
ANTIVOL DE CADRE

(30) Priorität: 03.09.2021 DE 102021122850
(43) Veröffentlichungstag der Anmeldung: 08.03.2023
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- DE-A1- 10 309 599
- DE-U- 1 842 230

## Beschreibung

Die Erfindung betrifft ein Rahmenschloss für ein Zweirad. Ein Rahmenschloss nach dem Oberbegriff des Anspruchs 1 ist aus DE 103 09 599 A1 bekannt .Ein weiteres Rahmenschloss wird beispielsweise in DE 18 42 230 U offenbart.

Von mobilen Zweiradschlössern unterscheiden sich Rahmenschlösser typischerweise dadurch, dass sie fest und in der Regel dauerhaft mit dem Rahmen des Zweirads verbunden, beispielsweise an Streben eines Rahmens des Zweirads angeschraubt, sind. Das Rahmenschloss wird dabei derart angeordnet, dass ein Schließbügel des Rahmenschlosses wahlweise aus einer Offenstellung, in welcher er die Räder des Zweirads nicht gegen Drehung sperrt, in eine Geschlossenstellung verstellt werden kann, in welcher er zwischen die Speichen eines der Räder eingreift, um auf diese Weise ein Fahren mit dem Zweirad zu verhindern. In dieser Geschlossenstellung kann der Schließbügel zweckmäßigerweise mittels einer Verriegelungsvorrichtung des Rahmenschlosses gesperrt, d. h. gegen ein Verlassen der Geschlossenstellung gesichert, werden, wobei ein Nutzer zur entriegelnden Betätigung der Verriegelungsvorrichtung über ein Schließgeheimnis, wie etwa einen Schlüssel, verfügen muss. Typische Bauformen für den Schließbügel sind einerseits eine Ausbildung als Schwenkbügel mit geradem Verlauf und andererseits eine Ausbildung als Drehbügel mit kreisbogenförmigem Verlauf.

Damit der Schließbügel des Rahmenschlosses das jeweilige Rad des Zweirads in seiner Geschlossenstellung zuverlässig sperren kann, in seiner Offenstellung hingegen sicher außerhalb der Bewegungsbahn des Rades angeordnet ist, und damit sich der Schließbügel zwischen diesen Stellungen auch ungehindert verstellen lässt, muss das Rahmenschloss in hierfür geeigneter Position an dem Zweirad befestigt sein. Üblich ist insbesondere, ein Rahmenschloss an den beiden Hinterbaustreben des Zweirades zu befestigen, d.h. an den zwei Streben des Hinterbaus des Zweirads, die auf entgegengesetzten Seiten des Hinterrades des Zweirads das Sattelrohr mit der Nabe des Hinterrades verbinden. Für die Befestigung von Zubehör sind an den Hinterbaustreben oftmals Gewindebuchsen vorgesehen, an denen das Rahmenschloss festgeschraubt werden kann. Allerdings können Zweiräder aufgrund der Vielzahl verschiedener Zweiradtypen und des allgemeinen Trends zu größerer Individualisierung sehr unterschiedliche Rahmengeometrien aufweisen, so dass die Positionen der Gewindebuchsen relativ zueinander sowie zu dem jeweiligen Rad stark variieren können. Darüber hinaus kann es auch vorkommen, dass ein Zweirad keine oder keine zur Befestigung des jeweiligen Rahmenschlosses geeigneten Gewindebuchsen aufweist.

Es ist eine Aufgabe der Erfindung, ein Rahmenschloss für ein Zweirad bereitzustellen, dessen Befestigung an dem Zweirad einfach und insofern besonders flexibel ist, als es sich an eine Vielzahl verschiedener Rahmengeometrien anpassen lässt, sowie ein Verfahren zur einfachen und flexiblen Befestigung des Rahmenschlosses an einem Zweirad bereitzustellen.

Die Aufgabe wird gelöst durch ein Rahmenschloss mit den Merkmalen des Anspruchs 1 sowie durch ein Verfahren nach Anspruch 15. Vorteilhafte Ausführungsformen der Erfindung ergeben sich aus den abhängigen Ansprüchen, der vorliegenden Beschreibung sowie den Figuren.

Das erfindungsgemäße Rahmenschloss für ein Zweirad umfasst ein Gehäuse, eine Verriegelungsvorrichtung, die in dem Gehäuse aufgenommen ist, sowie einen Schließbügel, der zwischen einer Offenstellung und einer Geschlossenstellung beweglich an dem Gehäuse gelagert ist und in der Geschlossenstellung mittels der Verriegelungsvorrichtung sperrbar ist. Der Schließbügel kann beispielsweise als Schwenkbügel oder als Drehbügel ausgebildet sein.

Entsprechend der üblichen Funktion eines Rahmenschlosses, kann das Rahmenschloss insbesondere dazu ausgebildet sein, derart an dem Zweirad angeordnet zu werden, dass der Schließbügel in seiner Geschlossenstellung ein Rad des Zweirads gegen Drehung sperrt, wohingegen er es in seiner Offenstellung für ein Drehen freigibt. Der Schließbügel ist dabei zwar grundsätzlich zwischen der Geschlossenstellung und der Offenstellung beweglich, nämlich beispielsweise von Hand verstellbar. Allerdings kann diese grundsätzliche Beweglichkeit durch die Verriegelungsvorrichtung aufgehoben werden, die den Schließbügel in der Geschlossenstellung sperren kann. Dazu kann die Verriegelungsvorrichtung zwischen einem Sperrzustand, in welchem sie den Schließbügel in dessen Geschlossenstellung sperrt, und einem Freigabezustand, in welchem sie den Schließbügel für eine Bewegung zwischen seiner Geschlossenstellung und seiner Offenstellung freigibt, verstellbar sein. Ein Verstellen der Verriegelungsvorrichtung aus dem Sperrzustand in den Freigabezustand setzt dabei vorzugsweise das Verfügen über ein Schließgeheimnis voraus. Auf diese Weise kann sichergestellt werden, dass nur ein Berechtigter den Schließbügel entsperren und das Rahmenschloss somit öffnen kann.

Die Verriegelungsvorrichtung kann beispielsweise einen Riegel umfassen, der mit dem Schließbügel sperrend zusammenwirken kann. Ferner kann die Verriegelungsvorrichtung einen Schließzylinder umfassen, über den der Riegel betätigt werden kann, wobei das Schließgeheimnis dann in Form eines dem Schließzylinder zugeordneten Schlüssels vorliegen kann. Der Riegel kann auch motorisch verstellbar sein, was eine Betätigung aus der Ferne ermöglichen kann. Dazu kann die Verriegelungsvorrichtung einen Motor und gegebenenfalls Kommunikationsmittel umfassen.

Die Art der Beweglichkeit des Schließbügel wird insbesondere durch dessen Lagerung an dem Gehäuse definiert. Beispielweise kann der Schließbügel an dem Gehäuse schwenkbar gelagert sein. Alternativ dazu kann der Schließbügel zumindest teilweise in einer Bügelaufnahme des Gehäuses aufgenommen und darin durch die Bügelaufnahme entlang ihres Verlaufs geführt verschiebbar sein. Grundsätzlich kann es sich dabei um eine lineare Verschiebbarkeit entlang einer geraden Strecke handeln. Vorzugsweise handelt es sich bei dem Schließbügel um einen Drehbügel, der sich längs einer Kreisbahn erstreckt und entlang dieser Kreisbahn zwischen seiner Offenstellung und seiner Geschlossenstellung verschiebbar ist. Ein solches Verschieben des Drehbügels entlang der Kreisbahn ist nicht linear, da es sich nicht um eine reine Translation handelt, sondern entspricht einem Drehen um eine Drehachse, die senkrecht zur Ebene der Kreisbahn durch den Mittelpunkt der Kreisbahn verläuft.

Zur Befestigung an dem Zweirad weist das Rahmenschloss zwei Befestigungsabschnitte mit zumindest einem jeweiligen Loch auf. In jedem der beiden Befestigungsabschnitte ist also zumindest ein solches Loch ausgebildet. Das Rahmenschloss ist dabei dazu ausgebildet, an dem Zweirad befestigt zu werden, indem in einer Einschraubrichtung durch die Löcher hindurch Schrauben in an dem Zweirad, insbesondere an Hinterbaustreben des Zweirads, vorgesehene Gewindebuchsen eingeschraubt werden. Mit anderen Worten sind die Befestigungsabschnitte und insbesondere deren jeweiliges Loch derart ausgebildet und an dem Rahmenschloss angeordnet, dass eine solche Befestigung mittels durch die Löcher hindurch in die Gewindebuchsen eingeschraubter Schrauben möglich ist. Dazu können die Befestigungsabschnitte insbesondere an einer Rückseite des Rahmenschlosses bzw. von dessen Gehäuse angeordnet sein, die zur Anlage an den Hinterbaustreben des Zweirads ausgebildet ist.

Die in den Befestigungsabschnitten ausgebildeten Löcher sind insbesondere so geformt und innerhalb des jeweiligen Befestigungsabschnitts ausgerichtet, dass sich eine jeweilige Schraube in der genannten Einschraubrichtung durch sie hindurch erstrecken kann. Beispielsweise können ein Eingangsquerschnitt und ein Ausgangsquerschnitt des jeweiligen Loches, die das jeweilige Loch an seinen entgegengesetzten Enden aufweist, zu der Einschraubrichtung senkrecht sein. Vorzugsweise erstrecken sich die Löcher dabei durchgehend durch den jeweiligen Befestigungsabschnitt hindurch, so dass eine eingeschraubte Schraube mit ihrem Kopf auf der einen Seite des Loches an diesem anliegen kann und mit ihrem Schaft auf der entgegengesetzten Seite des Loches aus diesem herausragen kann. Bei der Schraube kann es sich insbesondere um eine Schraube mit metrischem ISO-Gewinde der Größe M 5 handeln. Die Löcher der Befestigungsabschnitte weisen dann zweckmäßigerweise entsprechende Maße auf.

Die Anzahl der Befestigungsabschnitte (und somit auch die Anzahl der für das Befestigen des Rahmenschlosses mittels Schrauben vorgesehenen Löcher) ist dabei nicht auf zwei beschränkt. Allerdings weist das Rahmenschloss vorzugsweise genau zwei Befestigungsabschnitte der genannten Art auf, in denen jeweils genau ein Loch zur Aufnahme einer jeweiligen Schraube ausgebildet ist, da sich dadurch die Komplexität der Befestigung reduziert. Durch das Loch des einen der beiden Befestigungsabschnitte kann dann eine Schraube in eine Gewindebuchse eingeschraubt werden, die auf der einen Seite des jeweiligen Rads des Zweirads, insbesondere an einer von zwei Hinterbaustreben des Zweirads, vorgesehen ist, und durch das Loch des anderen Befestigungsabschnitts kann eine Schraube in eine Gewindebuchse eingeschraubt werden, die auf der anderen Seite des jeweiligen Rads, insbesondere an der anderen der zwei Hinterbaustreben, vorgesehen ist.

Die Gewindebuchsen können beispielsweise jeweils als Sockel mit einem Innengewinde ausgebildet sein, wobei der Sockel an dem Zweirad, insbesondere an einer jeweiligen Hinterbaustrebe des Zweirads, angeschweißt oder angelötet sein kann. Grundsätzlich können die Gewindebuchsen auch nachrüstbar, beispielsweise als von dem Zweirad zunächst unabhängige und an dem Zweirad anbringbare Anschraubsockel mit Innengewinde, ausgebildet sein und sich durch Befestigungsmittel in gewünschter Position an dem Zweirad befestigen lassen. Derartige nachrüstbare Gewindebuchsen können als Zubehörteile zu dem Rahmenschloss vorgesehen sein. Grundsätzlich sind die Gewindebuchsen jedoch kein integraler Bestandteil des Rahmenschlosses und insbesondere weder an dessen Gehäuse noch an dessen Befestigungsstücken vorgesehen.

Erfindungsgemäß ist jeder der zwei Befestigungsabschnitte als ein von dem Gehäuse separat ausgebildetes Befestigungsstück ausgebildet, in welchem das jeweilige Loch ausgebildet ist und welches linear entlang einer Verschieberichtung geführt verschiebbar an dem Gehäuse gelagert ist. Da die zwei Befestigungsabschnitte also jeweils als ein derartiges Befestigungsstück ausgebildet sind, umfasst das Rahmenschloss zumindest zwei, insbesondere genau zwei, derartige Befestigungsstücke. Die Befestigungsstücke sind dabei vorzugsweise baugleich zueinander, wodurch sich ihre Herstellung vereinfacht.

Dass die beiden Befestigungsstücke separat von dem Gehäuse ausgebildet sind, meint nicht, dass sie keine Verbindung zu dem Gehäuse hätten oder von dem Gehäuse beabstandet wären, sondern, dass sie als von dem Gehäuse grundsätzlich unabhängige Bauteile ausgebildet sind, die insbesondere separat von dem Gehäuse hergestellt sein können und auch ein anderes Material als das Gehäuse aufweisen können. Tatsächlich sind die beiden Befestigungsstücke mit dem Gehäuse verbunden, nämlich beweglich an dem Gehäuse gelagert. Bei dieser Beweglichkeit handelt es sich um eine Verschiebbarkeit entlang einer Verschieberichtung. Mit anderen Worten kann das jeweilige Befestigungsstück relativ zu dem Gehäuse sowohl in die Verschieberichtung als auch gerade entgegengesetzt dazu in die Gegenrichtung verschoben werden.

Die Verschieberichtung kann dabei für beide Befestigungsstücke identisch sein. Das ist jedoch nicht zwangsläufig der Fall, sondern jedes der zwei Befestigungsstücke kann entlang einer jeweiligen Verschieberichtung verschiebbar an dem Gehäuse gelagert sein, wobei sich die Verschieberichtungen der beiden Befestigungsstücke unterscheiden können. In beiden Fällen kann es vorteilhaft sein, wenn die (jeweilige) Verschieberichtung senkrecht zu der Einschraubrichtung ist, in welcher zur Befestigung des Rahmenschlosses an dem Zweirad Schrauben durch das Loch des jeweiligen Befestigungsstücks hindurch in an dem Zweirad vorgesehene Gewindebuchsen eingeschraubt werden können. Grundsätzlich kommt aber auch in Betracht, dass die (jeweilige) Verschieberichtung von einer zu der Einschraubrichtung senkrechten Ausrichtung abweicht, beispielsweise um einen Winkel von höchstens 15°, vorzugweise von höchstens 10°, insbesondere von höchstens 5°. Dabei kann es vorteilhaft sein, wenn beide Verschieberichtungen betragsmäßig um denselben Winkel, jedoch in entgegengesetzte Richtungen von einer zu der Einschraubrichtung senkrechten Ausrichtung abweichen. Insbesondere können die beiden Verschieberichtungen bezüglich der Einschraubrichtung oder einer zur Einschraubrichtung parallelen Ebene spiegelsymmetrisch zueinander ausgerichtet sein.

Linear ist die Verschiebbarkeit der Befestigungsstücke insbesondere insofern, als jedes der Befestigungsstücke entlang der jeweiligen Verschieberichtung in gerader Linie verschoben werden kann. Dabei wird das jeweilige Befestigungsstück, insbesondere durch die Art seiner Lagerung an dem Gehäuse, entlang der jeweiligen Verschieberichtung geführt. Das kann insbesondere umfassen, dass das jeweilige Befestigungsstück im Rahmen seiner Verschiebbarkeit überhaupt nur entlang der jeweiligen Verschieberichtung verschoben werden kann und dabei in keiner sonstigen Richtung oder Weise relativ zu dem Gehäuse beweglich ist (von gegebenenfalls vorhandenem Spiel abgesehen). Insbesondere kann vorgesehen sein, dass das jeweilige Befestigungsstück relativ zu dem Gehäuse weder drehbar noch schwenkbar ist. Insgesamt weist die sich aus der Lagerung des jeweiligen Befestigungsstücks an dem Gehäuse ergebende Beweglichkeit des Befestigungsstücks bevorzugt lediglich genau einen Freiheitsgrad auf.

Damit die Befestigungsstücke als Befestigungsabschnitte zum Befestigen des Rahmenschlosses an dem Zweirad dienen können, sind sie vorzugsweise an einer Außenseite des Gehäuses gelagert. Dabei können die Befestigungsstücke insbesondere vollständig außerhalb des Gehäuses angeordnet und verschiebbar sein.

Ferner ist es bevorzugt, dass die zwei Befestigungsstücke zumindest im Wesentlichen starr ausgebildet sind. Als starre Bauteile sind sie insbesondere nicht dazu ausgebildet, für die Befestigung an dem Zweirad verformt zu werden, vielmehr ist jedes der Befestigungsstücke dazu ausgebildet, seine Form, in der es linear verschiebbar an dem Gehäuse gelagert ist, sowohl bei als auch nach der Befestigung an dem Zweirad beizubehalten.

Während bei herkömmlichen Rahmenschlössern Befestigungsabschnitte zum Befestigen des jeweiligen Rahmenschlosses am Zweirad in der Regel als integraler Teil des Gehäuses ausgebildet sind, wobei die in den Befestigungsabschnitten ausgebildeten Löcher beispielsweise in einer Rückwand des Gehäuses oder in Flanschabschnitten des Gehäuses ausgebildet sind, sind bei dem erfindungsgemäßen Rahmenschloss die Befestigungsabschnitte von dem Gehäuse separat ausgebildet und darüber hinaus relativ zu dem Gehäuse geführt verschiebbar gelagert. Auf diese Weise wird erreicht, dass sich die Position der Befestigungsabschnitte, insbesondere der darin ausgebildeten Löcher, an die Rahmengeometrie des jeweiligen Zweirads anpassen lässt, so dass das erfindungsgemäße Rahmenschloss in besonders flexibler Weise an Zweirädern mit verschiedenen Rahmengeometrien befestigt werden kann.

Gemäß einer vorteilhaften Ausführungsform sind die Verschieberichtungen beider Befestigungsstücke zumindest im Wesentlichen parallel zueinander. Effektiv sind bei einer solchen Ausführungsform beide Befestigungsstücke also entlang derselben, für beide Befestigungsstücke gemeinsamen Verschieberichtung geführt verschiebbar an dem Gehäuse gelagert. Dadurch können die beiden Befestigungsstücke entlang der gemeinsamen Verschieberichtung relativ zueinander aufeinander zu oder voneinander weg verschoben werden, so dass der Abstand der in den beiden Befestigungsstücken ausgebildeten Löcher voneinander flexibel angepasst werden kann. Außerdem können die beiden Befestigungsstücke gemeinsam in dieselbe Richtung relativ zu dem Gehäuse verschoben werden. Daher kann auch das Rahmenschloss als Ganzes (von den Befestigungsstücken abgesehen) relativ zu beiden Befestigungsstücken verschoben werden, was eine nachträgliche Anpassung der Position des Rahmenschlosses relativ zu den Gewindebuchsen auch nach einem Einschrauben von Schrauben durch die Löcher der Befestigungsstücke hindurch in die Gewindebuchsen ermöglicht. Grundsätzlich kommt aber auch in Betracht, dass die beiden Verschieberichtungen schräg zueinander ausgerichtet sind. Beispielsweise können sie einen Winkel von höchstens 30°, vorzugsweise von höchstens 20°, insbesondere von höchstens 10° zwischen sich einschließen. Die Ebene, die von den beiden Verschieberichtungen dabei aufgespannt wird, ist vorzugsweise parallel zur Einschraubrichtung.

Gemäß einer weiteren vorteilhaften Ausführungsform ist das jeweilige Loch als Langloch ausgebildet, dessen Längserstreckung quer, insbesondere senkrecht, zu der Verschieberichtung des jeweiligen Befestigungsstücks ist. Insbesondere kann das Langloch einen geraden Verlauf aufweisen und bezüglich der Richtung dieses Verlaufs quer, insbesondere senkrecht, zu der Verschieberichtung des jeweiligen Befestigungsstücks ausgerichtet sein. Vorzugsweise ist die Längserstreckung des Langlochs auch quer, insbesondere senkrecht, zu der genannten Einschraubrichtung. Sofern ein Befestigungsstück mehr als ein Loch aufweist, das zur Befestigung des Rahmenschlosses an dem Zweirad genutzt werden kann, ist vorzugsweise jedes dieser Löcher als Langloch ausgebildet und quer, insbesondere senkrecht, zur Verschieberichtung des jeweiligen Befestigungsstücks ausgerichtet. Insbesondere können die mehreren Langlöcher eines jeweiligen Befestigungsstücks dann parallel zueinander ausgerichtet sein.

Durch die Kombination der linearen Verschiebbarkeit der Befestigungsstücke mit Langlöchern, die in den Befestigungsstücken ausgebildet und quer zu dieser Verschiebbarkeit ausgerichtet sind, wird die flexible Anpassbarkeit des Rahmenschlosses an unterschiedliche Rahmengeometrien verschiedener Zweiräder noch wesentlich verbessert. Denn da sich die Schrauben innerhalb der Langlöcher entlang der Längserstreckung des jeweiligen Langlochs verschieben lassen und außerdem die Befestigungsstücke, in denen die Langlöcher ausgebildet sind, quer dazu verschiebbar sind, lässt sich nicht nur der Abstand der Langlöcher an den Abstand der Gewindebuchsen anpassen, sondern kann auch das Gehäuse des Rahmenschlosses, noch nachdem Schrauben durch die Langlöcher hindurch in die Gewindebuchsen eingeschraubt wurden, nach Art eines Kreuzschlittens sowohl entlang der Verschieberichtung der Befestigungsstücke als auch quer dazu entlang der Längserstreckung der Langlöcher relativ zu den Gewindebuchsen in eine geeignete Position verschoben werden (zumindest solange die Schrauben noch nicht festgezogen sind). Dies gilt insbesondere, wenn die Befestigungsstücke parallel zueinander verschiebbar sind, wobei dann die in den beiden Befestigungsstücken ausgebildeten Langlöcher ihrerseits vorzugsweise ebenfalls parallel zueinander ausgerichtet sind.

Ferner ist es bevorzugt, dass die Befestigungsstücke unverlierbar an dem Gehäuse gelagert sind, so dass sie sich, auch wenn das Rahmenschloss noch nicht an dem Zweirad befestigt ist, nicht selbsttätig (z. B. aufgrund der Schwerkraft) von dem Gehäuse lösen können. Innerhalb der Strecke, entlang welcher sie relativ zu dem Gehäuse geführt verschiebbar an diesem gelagert sind, können sie gerade durch diese Führung an dem Gehäuse gehalten werden. Um zu vermeiden, dass sich die Befestigungsstücke an den Enden ihrer geführten Verschiebbarkeit von dem Gehäuse lösen können, können Mittel vorgesehen sein, welche die Befestigungsstücke dagegen sperren, über diese Enden hinaus bewegt zu werden.

Dementsprechend können gemäß einer weiteren vorteilhaften Ausführungsform an dem Gehäuse und/oder an den Befestigungsstücken Anschläge ausgebildet sein, welche die Verschiebbarkeit der Befestigungsstücke auf eine definierte Strecke entlang der Verschieberichtung des jeweiligen Befestigungsstücks beschränken. Somit können die Befestigungsstücke innerhalb der Strecke grundsätzlich frei entlang der jeweiligen Verschieberichtung geführt verschoben werden, schlagen aber an den Enden der Strecke mit einem an dem jeweiligen Befestigungsstück ausgebildeten Anschlag und/oder gegen einen an dem Gehäuse ausgebildeten Anschlag an, so dass sie nicht über die definierte Strecke hinaus bewegt werden und sich auch nicht (zumindest nicht selbsttätig) von dem Gehäuse lösen können.

Dabei kann vorgesehen sein, dass sich wenigstens ein jeweiliger Anschlag elastisch zurückdrängen lässt, beispielsweise um das jeweilige Befestigungsstück an dem Gehäuse montieren, insbesondere in die Lagerung an dem Gehäuse einsetzen, zu können und/oder es, zum Beispiel für einen Austausch, von dem Gehäuse lösen zu können. Bei der Montage des Befestigungsstücks an dem Gehäuse kann der jeweilige Anschlag nach dem Anbringen des Befestigungsstücks an dem Gehäuse elastisch aus seiner zurückgedrängten Stellung in seine Normalstellung zurückkehren. Auf diese Weise kann das Befestigungsstück in seine verschiebbare Lagerung an dem Gehäuse einrasten.

Gemäß einer weiteren vorteilhaften Ausführungsform ist jedes der Befestigungsstücke als eine zu einer Befestigungsebene parallel ausgerichtete flächige Befestigungsplatte ausgebildet, wobei die Verschieberichtung des jeweiligen Befestigungsstücks parallel zu der Befestigungsebene ist. Grundsätzlich kann, wenn die Befestigungsstücke als Befestigungsplatten ausgebildet sind, eine Befestigungsplatte parallel zu einer anderen jeweiligen Befestigungsebene ausgerichtet und verschiebbar sein als eine andere. Vorzugsweise handelt es sich aber jeweils um dieselbe Befestigungsebene, so dass die Befestigungsplatten parallel zu einer gemeinsamen Befestigungsebene ausgerichtet und verschiebbar sind.

Die Befestigungsplatten sind insbesondere insofern flächig, als sie jeweils zwei zu einer Normalrichtung senkrechte und bezüglich der Normalrichtung entgegengesetzte Seitenflächen aufweisen, deren Abstand entlang der Normalrichtung voneinander wesentlich geringer ist als ihre jeweilige Erstreckung in zwei zueinander sowie zur Normalrichtung senkrechten Raumrichtungen. Insbesondere beträgt dieser Abstand höchstens 50 %, vorzugsweise höchstens 40 %, der geringsten Erstreckung einer jeweiligen der Seitenflächen in eine zu der Normalrichtung senkrechten Raumrichtung. Dass eine jeweilige Befestigungsplatte parallel zu einer Ebene ist, meint dabei insbesondere, dass die Richtung geringster Ausdehnung der jeweiligen Befestigungsplatte (die der genannten Normalrichtung entsprechen kann) senkrecht zu dieser Ebene ist. Eine der genannten zwei zu der Normalrichtung senkrechten Seitenflächen der jeweiligen Befestigungsplatte kann dabei in der Befestigungsebene liegen. Insbesondere können sowohl eine solche Seitenfläche der einen Befestigungsplatte als auch eine solche Seitenfläche der anderen Befestigungsplatte in einer gemeinsamen Befestigungsebene liegen.

Für ein Rahmenschloss ist es zweckmäßig, wenn das Gehäuse eine C- oder U-Form aufweist, so dass das Rahmenschloss derart an dem Zweirad angeordnet werden kann, dass das Gehäuse des Rahmenschlosses mit den Schenkeln der C- oder U-Form den Reifen und die Felge eines Rades des Zweirads umgreifen kann und sich der Schließbügel des Rahmenschlosses in seiner Geschlossenstellung zwischen den Speichen des Rades hindurch von dem einen Schenkel zu dem anderen erstrecken kann, um das Rad auf diese Weise gegen Drehung zu sperren. Die C- oder U-Form des Gehäuses kann dabei bezüglich einer Mittelebene, die zwischen den beiden Schenkeln der C- oder U-Form verläuft, zumindest im Wesentlichen spiegelsymmetrisch sein. Insbesondere kann diese Mittelebene parallel zu der Einschraubrichtung sein, in welcher zur Befestigung des Rahmenschlosses an dem Zweirad Schrauben durch die Löcher der Befestigungsabschnitte hindurch in an dem Zweirad vorgesehene Gewindebuchsen eingeschraubt werden können.

Die genannte Spiegelsymmetrie impliziert dabei nicht, dass das Gehäuse als Ganzes exakt spiegelsymmetrisch ausgebildet sein muss, sondern bezieht sich auf die idealisierte C- oder U-Form, auf welche das Gehäuse bei vereinfachender Betrachtung reduziert werden kann.

Gemäß einer vorteilhaften Ausführungsform sind die Strecken, entlang welcher die beiden Befestigungsstücke verschiebbar sind, bezüglich der genannten Mittelebene spiegelsymmetrisch zueinander. Insbesondere können die Verschieberichtungen beider Befestigungsstücke dabei senkrecht zu dieser Mittelebene (und somit auch parallel zueinander) sein. Sofern die in den Befestigungsstücken ausgebildeten Löcher jeweils als Langloch ausgebildet sind, ist ferner deren jeweilige Längserstreckung vorzugsweise parallel zu der genannten Mittelebene. Durch derartige Symmetrien und Ausrichtungen kann das Rahmenschloss in beide Richtungen senkrecht zur Mittelebene gleichermaßen flexibel positionierbar sein.

Gemäß einer weiteren vorteilhaften Ausführungsform ist jedes der Befestigungsstücke zumindest zweiteilig ausgebildet und umfasst ein erstes Befestigungsteil sowie ein zweites Befestigungsteil, die fest miteinander verbunden sind, wobei das erste Befestigungsteil ein Loch aufweist und das zweite Befestigungsteil ein Loch aufweist und die Löcher der beiden Befestigungsteile derart bezüglich der Einschraubrichtung überlappend angeordnet sind, dass sie gemeinsam das zumindest eine Loch des jeweiligen Befestigungsstücks bilden. Das jeweilige Befestigungsstück ist dabei insofern zweiteilig ausgebildet, als es sich bei dem ersten Befestigungsteil und dem zweiten Befestigungsteil um zwei separate voneinander hergestellte Teile handelt, die gemeinsam das Befestigungsstück bilden, wobei nicht grundsätzlich ausgeschlossen ist, dass das Befestigungsstück noch weitere Teile umfasst.

Das erste Befestigungsteil kann ein in Einschraubrichtung vorderes Teil sein und das zweite Befestigungsteil kann ein in Einschraubrichtung hinteres Teil sein, so dass das zweite Befestigungsteil weiter in die Einschraubrichtung angeordnet ist als das erste Befestigungsteil. Das erste Befestigungsteil umfasst dabei als Material vorzugsweise ein Metall und kann insbesondere als, zum Beispiel gestanzte, Blechplatte ausgebildet sein. Das zweite Befestigungsteil kann als Material beispielsweise einen Kunststoff umfassen und insbesondere als Spritzgussteil ausgebildet sein.

Dass die beiden Befestigungsteile fest miteinander verbunden sind, meint insbesondere, dass sie dauerhaft mit einander verbunden sind, dass also bei üblicher Benutzung des Rahmenschlosses nicht vorgesehen ist, dass sie voneinander gelöst werden. Zudem sind die Befestigungsteile vorzugsweise derart miteinander verbunden, dass sie zumindest entlang der Verschieberichtung relativ zueinander nicht beweglich sind. Des Weiteren ist es bevorzugt, dass das erste Befestigungsteil und das zweite Befestigungsteil formschlüssig miteinander verbunden sind. Insbesondere können sie miteinander verklipst sein, so dass beim Verbinden der beiden Befestigungsteile das eine formschlüssig an dem anderen einrastet.

Das in dem jeweiligen Befestigungsstück ausgebildete zumindest eine Loch erstreckt sich dabei durch die beiden Befestigungsteile des jeweiligen Befestigungsstücks hindurch, so dass beide Befestigungsteile jeweils selbst ein Loch aufweisen und sich das Loch des Befestigungsstücks aus der Überlappung der beiden in einem jeweiligen der zwei Befestigungsteile ausgebildeten Löcher ergibt. Die Löcher überlappen dabei insofern bezüglich der Einschraubrichtung, als sie entlang der Einschraubrichtung hintereinander liegen, so dass bei Blick entlang der Einschraubrichtung das eine Loch das andere überdeckt. Das durchgehende Loch des Befestigungsstücks hat dabei die Form der Schnittmenge der Formen der Löcher der Befestigungsteile, aus denen das Befestigungsstück gebildet ist. Vorzugsweise sind die Löcher der Befestigungsteile dabei zumindest im Wesentlichen deckungsgleich. Insbesondere können sie jeweils als Langloch ausgebildet sein und dieselbe Länge (Ausdehnung entlang der Längserstreckung) und Breite (Ausdehnung senkrecht zur Längserstreckung) aufweisen. Die Löcher der beiden Befestigungsteile müssen dabei entlang der Einschraubrichtung nicht unbedingt unmittelbar aneinander anliegen, sondern können auch mit einem gewissen Abstand zueinander angeordnet sein.

Die Befestigungsstücke können dadurch linear entlang ihrer jeweiligen Verschieberichtung geführt verschiebbar an dem Gehäuse gelagert sein, dass an den Befestigungsstücken oder an dem Gehäuse Nuten ausgebildet sind, in die an dem jeweils anderen Bauteil vorgesehene Stege eingreifen. Vorzugsweise weisen die Nuten und die Stege dabei einen geraden Verlauf auf und sind bezüglich ihres jeweiligen Verlaufs parallel zur Verschieberichtung ausgerichtet.

Gemäß einer weiteren vorteilhaften Ausführungsform weist jedes der Befestigungsstücke eine oder mehrere zur Verschieberichtung parallel ausgerichtete Nuten auf, wobei in jede der Nuten ein jeweiliger an dem Gehäuse ausgebildeter Steg eingreift. Die zur Verschieberichtung parallele Ausrichtung der Nuten bezieht sich dabei auf deren jeweiligen Verlauf. Die in die Nuten eingreifenden Stege sind entsprechend ausgerichtet, um die Verschiebbarkeit des jeweiligen Befestigungsstücks relativ zu dem Gehäuse zu ermöglichen. Die Stege können beispielsweise als Blechkanten ausgebildet sein, die von einer Außenseite des Gehäuses vorstehen.

Vorzugsweise weist jedes der Befestigungsstücke zwei, insbesondere bezüglich einer zur Verschieberichtung senkrechten Richtung, entgegengesetzt zueinander angeordnete Nuten auf. Die Nuten können beispielsweise an zwei einander entgegengesetzten Rändern des jeweiligen Befestigungsteils, insbesondere an entgegengesetzten Randseiten eines als flächige Befestigungsplatte ausgebildeten jeweiligen Befestigungsteils, vorgesehen sein. Die Nuten sind dabei insbesondere insofern entgegengesetzt zueinander angeordnet, als sie sich aus entgegengesetzten Richtungen, insbesondere aufeinander zu, in das Befestigungsstück hinein erstrecken und dementsprechend mit der offenen Seite ihres jeweiligen Querschnitts in entgegengesetzte Richtungen, insbesondere voneinander weg, weisen.

Die an dem Gehäuse ausgebildeten Stege, welche in die Nuten eines jeweiligen Befestigungsstücks eingreifen, können dabei insbesondere derart angeordnet sein, dass sie aus entgegengesetzten Richtungen aufeinander zu in eine jeweilige der Nuten eingreifen. Das jeweilige Befestigungsstück kann dabei also zwischen den Stegen angeordnet sein. Insbesondere kann das jeweilige Befestigungsstück zur Montage an dem Gehäuse zwischen den am Gehäuse ausgebildeten Stegen eingeschoben werden.

Die Nuten können dabei an zumindest einem ihrer Enden oder auch an beiden Enden jeweils grundsätzlich offen ausgebildet sein, um das genannte Einschieben zu ermöglichen. Es kann aber auch vorgesehen sein, dass eine oder mehrere der Nuten, insbesondere alle Nuten, an zumindest einem ihrer Enden durch einen Sperrabschnitt verschlossen sind, so dass der in die jeweilige Nut eingreifende Steg die Nut an diesem Ende nicht verlassen kann. Der Sperrabschnitt kann insofern als ein Anschlag, wie er weiter oben beschriebenen wurde, fungieren und als solcher die Verschiebbarkeit des jeweiligen Befestigungsstücks in zumindest eine Richtung beschränken. Der Sperrabschnitt kann dabei elastisch zurückdrängbar ausgebildet sein, damit für die Montage oder für einen Austausch des jeweiligen Befestigungsstücks der jeweilige Steg an dem Sperrabschnitt vorbeigeführt werden kann.

Wenn die Befestigungsstücke wie erläutert zweiteilig ausgebildet sind, ist es vorteilhaft, wenn eine oder mehrere der Nuten zwischen den beiden Befestigungsteilen des jeweiligen Befestigungsstücks ausgebildet sind. Die Nut kann dann quer zu ihrem Verlauf auf der einen Seite durch das eine Befestigungsteil und auf der anderen Seite durch das andere Befestigungsteil begrenzt werden. Der Boden der Nut kann teilweise durch das eine und teilweise durch das andere Befestigungsteil oder auch nur durch eines der beiden Befestigungsteile gebildet werden. Grundsätzlich kann der Boden der Nut auch zumindest teilweise offen ausgebildet sein.

Bei einer solchen Ausführungsform, bei der eine oder mehrere Nuten zwischen den beiden Befestigungsteilen des jeweiligen Befestigungsstücks ausgebildet sind, ist es ferner vorteilhaft, wenn die Befestigungsteile des jeweiligen Befestigungsstücks, jedenfalls solange das Rahmenschloss noch nicht am Zweirad befestigt ist, in der Einschraubrichtung Spiel zueinander aufweisen, also in der Einschraubrichtung zumindest in gewissem Maße relativ zueinander beweglich sind, und dazu ausgebildet sind, bei an dem Zweirad befestigtem Rahmenschloss von der durch das Loch des Befestigungsstücks hindurch eingeschraubten Schraube derart entlang der Einschraubrichtung gegeneinander gespannt zu werden, dass zumindest einer der in eine jeweilige Nut des Befestigungsstücks eingreifenden Stege des Gehäuses in der jeweiligen Nut eingeklemmt wird. Auf diese Weise kann durch das Festziehen der Schraube eine reibschlüssige Festlegung der beim Festziehen eingenommenen Position des Befestigungsstücks entlang seiner Verschieberichtung erreicht werden. Solange die Schraube dagegen nur eingeschraubt, aber noch nicht festgezogen ist, kann das Befestigungsstück noch relativ zu dem Gehäuse verschoben werden und das Gehäuse somit noch relativ zu den am Zweirad vorgesehenen Gewindebuchsen flexibel positioniert werden.

Gemäß einer weiteren vorteilhaften Ausführungsform ist in jedem der Befestigungsstücke in dessen in die Einschraubrichtung weisenden Seite eine Aufnahme zum Aufnehmen eines Anschraubsockels mit Innengewinde ausgebildet, die das Loch des jeweiligen Befestigungsstücks einseitig bereichsweise verbreitert. Derartige Anschraubsockel mit Innengewinde können an Zweirädern, die keine Gewindebuchsen an geeigneter Stelle aufweisen, diese ersetzen und dazu nachträglich an einem jeweiligen Zweirad anbringbar sein. Das Rahmenschloss kann dann dazu ausgebildet sein, an dem Zweirad befestigt zu werden, indem in der Einschraubrichtung durch die Löcher hindurch Schrauben in die an dem Zweirad angebrachten Anschraubsockel mit Innengewinde angeschraubt werden. Hierzu kann die Aufnahme insbesondere im Bereich des Loches des jeweiligen Befestigungsstücks ausgebildet sein.

Da die Anschraubsockel (anders als dauerhaft an dem Zweirad ausgebildete Gewindebuchsen) nicht auf eine exakt definierte Position an dem Zweirad festgelegt sind, kann es zweckmäßig sein, stattdessen ihre Anordnung relativ zu einem jeweiligen Befestigungsstück des Rahmenschlosses eindeutig festzulegen. Zu diesem Zweck kann die genannte Aufnahme komplementär zur Form des Anschraubsockels ausgebildet sein, so dass der Anschraubsockel quer zur Einschraubrichtung zumindest im Wesentlichen ohne Spiel in der Aufnahme aufgenommen werden kann.

Während das Loch nicht wesentlich breiter zu sein braucht als der Durchmesser des Innengewindes des Anschraubsockels, um die Schraube aufnehmen zu können, muss die Aufnahme den im Vergleich zum Innengewinde breiteren Anschraubsockel aufnehmen können und ist daher gegenüber dem Loch zumindest bereichsweise verbreitert. Wenn das Loch als Langloch ausgebildet ist, kann die Aufnahme insbesondere dazu dienen, den Anschraubsockel auf eine bestimmte Position entlang der Längserstreckung des Langloches festzulegen. Zu diesem Zweck ist das Langloch vorzugsweise nicht entlang seiner gesamten Längserstreckung, sondern nur in einem der Position entsprechenden, zum Beispiel zentralen, Bereich der Längserstreckung durch die Aufnahme verbreitert.

Um den Anschraubsockel aufnehmen zu können, reicht es aus, wenn die Aufnahme auf der in die Einschraubrichtung weisenden Seite des jeweiligen Befestigungsstücks ausgebildet ist und das Loch des Befestigungsstücks daher nur einseitig, also nur auf der genannten Seite und insbesondere nicht durchgehend, verbreitert ist, zumal bei einer durchgehenden Verbreiterung die Gefahr bestünde, dass die Schraube mitsamt ihrem Kopf durch das Loch hindurch gelangen könnte und das Befestigungsstück somit nicht an dem Anschraubsockel befestigen könnte.

Die Anschraubsockel können von dem Rahmenschloss unabhängig sein. Für einen Nutzer des Rahmenschlosses ist es aber zweckmäßig, wenn die Anschraubsockel dem Rahmenschloss beigefügt sind. Daher ist es bei der vorstehenden Ausführungsform ferner vorteilhaft, wenn das Rahmenschloss zwei Bandschellen umfasst, die zur Befestigung an einer jeweiligen Strebe, insbesondere Hinterbaustrebe, des Zweirads ausgebildet sind, wobei jede der Bandschellen einen an der jeweiligen Bandschelle angeordneten Anschraubsockel mit Innengewinde aufweist, der eine zu den in den Befestigungsstücken ausgebildeten Aufnahmen komplementäre Form aufweist.

Mittels der Bandschellen können die Anschraubsockel an dem Zweirad befestigt werden. Vorzugsweise sind die Anschraubsockel dabei an der jeweiligen Bandschelle verschiebbar angeordnet. Nach der Befestigung der Anschraubsockel an dem Zweirad kann das Rahmenschloss mit den Befestigungsstücken auf die Anschraubsockel derart aufgesetzt werden, dass diese in die in den Befestigungsstücken ausgebildeten Aufnahmen eingreifen. Die zueinander komplementären Formen der Anschraubsockel und der Aufnahmen sorgen dabei vorteilhafterweise für einen passgenauen Sitz. Der Anschraubsockel kann beispielsweise die Form eines konischen Doms aufweisen, die ein Einführen des Anschraubsockels in die dazu komplementär ausgebildete Aufnahme erleichtert.

Das erfindungsgemäße Verfahren zum Befestigen eines erfindungsgemäßen Rahmenschlosses (das insbesondere auf eine der vorstehend beschriebenen Weisen ausgebildet sein kann) an einem Zweirad umfasst die folgenden Schritte: Verschieben der Befestigungsstücke relativ zueinander, bis der Abstand der in den Befestigungsstücken ausgebildeten Löcher dem Abstand zweier an dem Zweirad vorgesehener Gewindebuchsen oder zweier an dem Zweirad angebrachter Anschraubsockel mit Innengewinde entspricht; Eindrehen zweier Schrauben durch die Löcher hindurch in die Gewindebuchsen oder in die Anschraubsockel; Verschieben des Gehäuses des Rahmenschlosses relativ zu den Gewindebuchsen oder den Anschraubsockeln, bis eine gewünschte Position des Rahmenschlosses relativ zu dem Zweirad erreicht ist; Festziehen der Schrauben zum Festlegen der Position.

Das Verschieben der Befestigungsstücke relativ zueinander kann sich darauf beschränken, dass eines der beiden Befestigungsstücke verschoben wird. Außerdem ist das Verschieben aufgrund der linear geführt verschiebbaren Lagerung der Befestigungsstücke an dem Gehäuse des Rahmenschlosses auf ein Verschieben entlang der Verschieberichtung des jeweiligen Befestigungsstücks beschränkt. Das Verschieben des Gehäuses des Rahmenschlosses relativ zu den Gewindebuchsen hingegen muss nicht ebenfalls auf die Verschieberichtung beschränkt sein. Insbesondere wenn es sich bei den in den Befestigungsstücken ausgebildeten Löchern um Langlöcher handelt, deren Längserstreckung quer zu der Verschieberichtung ist, kann aufgrund der Beweglichkeit der Schrauben innerhalb der Langlöcher das Gehäuse auch entlang der jeweiligen Längserstreckung der Langlöcher relativ zu den Gewindebuchsen verschoben werden. Wenn anstelle von an dem Zweirad vorgesehenen Gewindebuchsen an Streben des Zweirads Anschraubsockel angebracht wurden, können diese parallel zum Verlauf der Streben, der vorzugsweise quer zur Verschieberichtung ist, verschiebbar sein. Durch Überlagerung derartiger Verschiebbarkeiten mit der Verschiebbarkeit entlang der Verschieberichtung lässt sich das Gehäuse vorteilhafterweise innerhalb eines gesamten zweidimensionalen Flächenbereichs zumindest im Wesentlichen frei positionieren, bevor die Position durch Festziehen der Schrauben festgelegt wird.

Die Erfindung wird im Folgenden lediglich beispielhaft unter Bezugnahme auf die Figuren weiter erläutert.
- Fig. 1 und 2: zeigen eine Ausführungsform des erfindungsgemäßen Rahmenschlosses jeweils in einer Ansicht von vorne in zwei unterschiedlichen Stellungen der Befestigungsstücke.
- Fig. 3 und 4: zeigen dieselbe Ausführungsform des erfindungsgemäßen Rahmenschlosses jeweils in einer Ansicht schräg von hinten in denselben zwei unterschiedlichen Stellungen der Befestigungsstücke wie in den Fig. 1 und 2.
- Fig. 5 und 6: zeigen eines der Befestigungsstücke der in den Fig. 1 bis 4 gezeigten Ausführungsform des erfindungsgemäßen Rahmenschlosses gesondert einmal im zusammengebauten Zustand (Fig. 5) und einmal mit voneinander getrennten Befestigungsteilen, aus denen das Befestigungsstück gebildet ist (Fig. 6).
- Fig. 7: zeigt eine Bandschelle, die bei einem erfindungsgemäßen Rahmenschloss vorgesehen sein kann, um eine Befestigungsmöglichkeit für das Rahmenschloss an einer Strebe eines Zweirads vorzusehen.
- Fig. 8: zeigt einen Ausschnitt der in den Fig. 1 bis 4 gezeigten Ausführungsform des erfindungsgemäßen Rahmenschlosses, die mittels der in Fig. 7 gezeigten Bandschelle an einer Strebe eines Zweirads befestigt ist, wobei der Bereich der Befestigung in Schnittdarstellung gezeigt ist.
- Fig. 9: zeigt die in den Fig. 1 bis 4 gezeigte Ausführungsform des erfindungsgemäßen Rahmenschlosses, die mittels zweier Bandschellen der in Fig. 7 gezeigten Art an zwei Streben eines Zweirads befestigt ist, in einer Ansicht schräg von hinten.

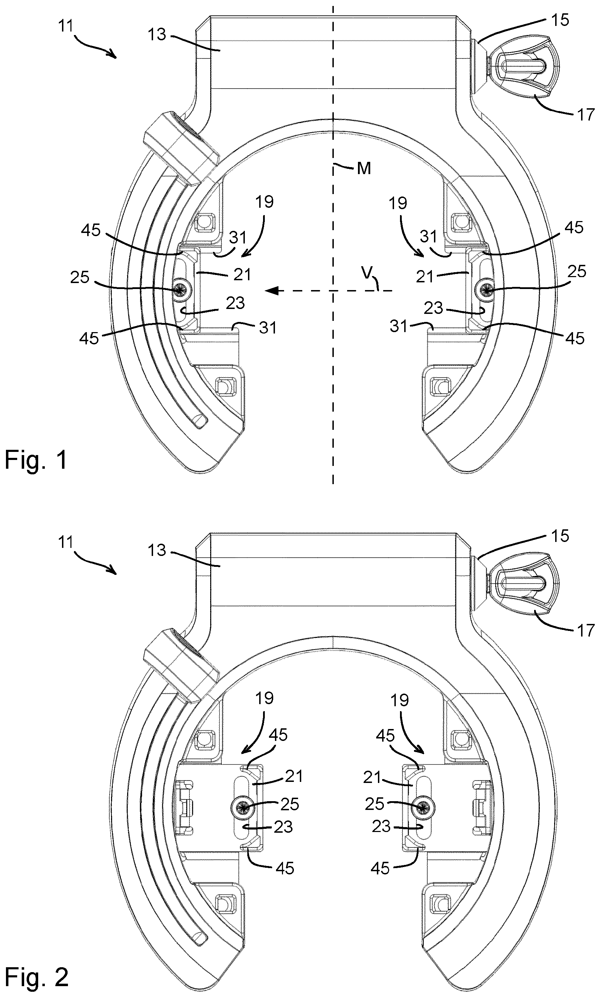

In den Figuren ist jeweils dieselbe Ausführungsform eines erfindungsgemäßen Rahmenschlosses 11 dargestellt, wobei das Rahmenschloss 11 nicht in allen Figuren vollständig gezeigt ist. Das Rahmenschloss 11 umfasst ein Gehäuse 13, das eine C-Form mit einem quaderförmigen zentralen Abschnitt sowie zwei sich entgegengesetzt zueinander aus dem zentralen Abschnitt heraus erstreckenden, kreisbogenförmigen Schenkeln aufweist. Bezüglich der idealisierten C-Form ist das Rahmenschloss 11 zu einer Mittelebene M (nur in Fig. 1 gekennzeichnet) spiegelsymmetrisch ausgebildet. Auch was seine tatsächliche äußere Ausgestaltung betrifft, ist das Rahmenschloss 11 zu der Mittelebene M zumindest weitgehend spiegelsymmetrisch ausgebildet.

In einer Bügelaufnahme, die sich entlang einer Kreisbahn durch den in den Fig. 1 und 2 links dargestellten Schenkel zum zentralen Abschnitt und gegebenenfalls darüber hinaus bis in den anderen Schenkel erstreckt, ist ein als Drehbügel ausgebildeter Schließbügel des Rahmenschlosses 11 aufgenommen, der sich längs einer Kreisbahn erstreckt. Der Schließbügel ist entlang der Kreisbahn zwischen einer Offenstellung, in welcher er vollständig innerhalb der Bügelaufnahme des Gehäuses 13 angeordnet ist, und einer Geschlossenstellung, in welcher er an der Stirnseite des ersten Schenkels aus dem Gehäuse 13 herausragt und sich bis zur Stirnseite des zweiten Schenkels oder gegebenenfalls durch die Stirnseite des zweiten Schenkels hindurch in eine dort vorgesehene Eingriffsöffnung hinein erstreckt, verstellbar. In den Figuren ist jeweils die Offenstellung gezeigt.

Das Rahmenschloss 11 ist dazu ausgebildet, derart an einem Rad eines jeweiligen Zweirads befestigt zu werden, dass das Gehäuse 13 des Rahmenschlosses Reifen und Felge des Rades umgreift, wobei die Schenkel der C-Form des Gehäuses 13 auf entgegengesetzten Seiten des Rades angeordnet sind. In seiner Geschlossenstellung kann der Schließbügel dann die Speichen des Rades durchgreifen, um das Rad gegen Drehung zu sperren. In der Offenstellung dagegen bleibt der Bereich zwischen den Stirnseiten der Schenkel der C-Form des Gehäuses 13 frei, so dass das Rad frei drehen kann.

In dem Gehäuse 13 ist ferner eine Verriegelungsvorrichtung 15 aufgenommen, von der in den Figuren nur ein Endabschnitt eines von der Verriegelungsvorrichtung 15 umfassten Schließzylinders zu sehen ist, mit dem die Verriegelungsvorrichtung 15 aus dem zentralen Abschnitt des Gehäuses 13 herausragt und in den ein Schlüssel 17 eingeführt werden kann, um die Verriegelungsvorrichtung 15 zu betätigen. Der überwiegende Teil der Verriegelungsvorrichtung 15 ist innerhalb des Gehäuses 13 angeordnet und umfasst insbesondere einen in den Figuren nicht zu sehenden Riegel, der sich mittels des Schlüssels 17 zwischen einer Entriegelungsstellung und einer Verriegelungsstellung verstellen lässt und dazu ausgebildet ist, in der Verriegelungsstellung den Schließbügel in dessen Geschlossenstellung zu sperren, so dass das Rahmenschloss 11 nur mittels des Schlüssels 17 geöffnet werden kann.

Um an dem Zweirad befestigt werden zu können, weist das Rahmenschloss 11 zwei Befestigungsabschnitte 19 auf, die bei dem erfindungsgemäßen Rahmenschloss 11 anders als bei herkömmlichen Rahmenschlössern nicht als integraler Bestandteil des Gehäuses 13, sondern als separat von dem Gehäuse 13 ausgebildete Befestigungsstücke 21 ausgebildet sind. Jedes der Befestigungsstücke 21 weist dabei ein jeweiliges Loch 23 auf, das als Langloch ausgebildet ist. Mittels Schrauben 25, die in einer zur Bildebene der Fig. 1 und 2 senkrechten Einschraubrichtung durch die Löcher 23 hindurch an dem Zweirad eingeschraubt werden, kann das Rahmenschloss 11 dann an dem Zweirad befestigt werden.

Die Befestigungsstücke 21 sind in zwei Flanschbereichen des Gehäuses 13 angeordnet, die auf der konkaven Seite eines jeweiligen der beiden Schenkel der C-Form des Gehäuses 13 an den jeweiligen Schenkel angrenzen. Auch die in den Befestigungsstücken 21 ausgebildeten Löcher 23 sind dadurch in einem jeweiligen der zwei Flanschbereiche angeordnet.

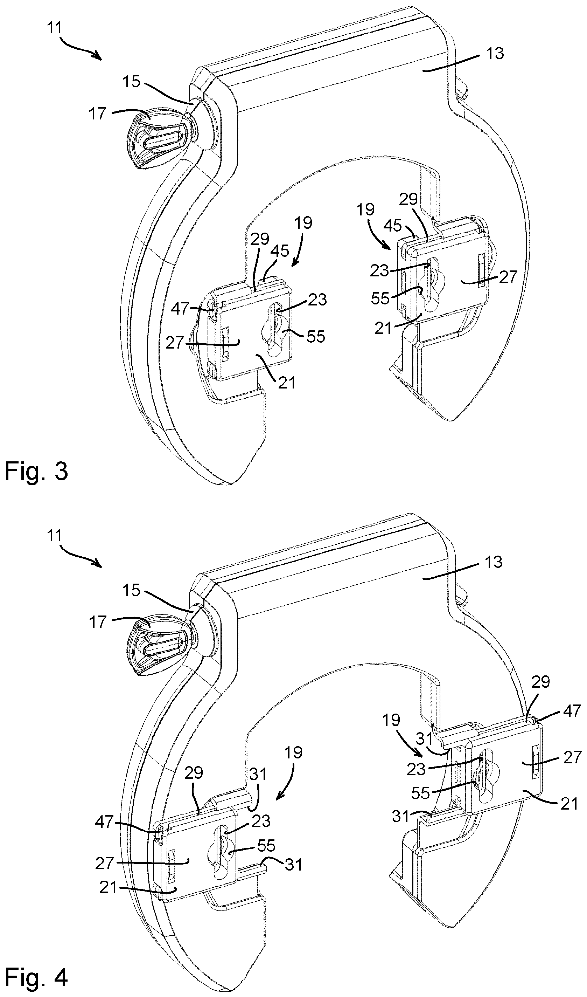

Wie insbesondere in den Fig. 3, 4 und 5 zu erkennen ist, sind die Befestigungsstücke 21 jeweils als zwei flächige Befestigungsplatten ausgebildet, die parallel zueinander angeordnet sind. Insbesondere liegen die Befestigungsstücke 21 mit einer jeweiligen Rückseite 27 in einer gemeinsamen Befestigungsebene, die zu der Bildebene der Fig. 1 und 2 parallel ist.

Wie ein Vergleich der Fig. 1 und 2 mit den Fig. 3 und 4 zeigt, sind die Befestigungsstücke 21 relativ zu dem Gehäuse 13 linear entlang einer Verschieberichtung V (nur in Fig. 1 gekennzeichnet) verschiebbar gelagert, die zu der genannten Befestigungsebene parallel ist. Dadurch befinden sich die Rückseiten 27 der beiden Befestigungsstücke 21 unabhängig von der jeweiligen Position der Befestigungsstücke 21 stets in der Befestigungsebene. Außerdem sind die Befestigungsstücke 21 bezüglich der genannten Mittelebene M spiegelsymmetrisch angeordnet, wobei ihre Verschieberichtung V zu der Mittelebene M senkrecht ausgerichtet ist, so dass beide Befestigungsstücke 21 parallel zueinander entlang einer durchgehenden Linie verschiebbar sind.

Die Befestigungsstücke 21 sind unabhängig voneinander sowohl in die Verschieberichtung V als auch entgegen der Verschieberichtung V verschiebbar. Allerdings ist für beide Befestigungsstücke 21 die Verschiebbarkeit jeweils auf eine definierte Strecke entlang der Verschieberichtung V beschränkt. In den Fig. 1 bis 4 befinden sich die Befestigungsstücke 21 an einem jeweiligen Ende dieser definierten Strecke, d. h. an einem jeweiligen Ende ihrer jeweiligen Verschiebbarkeit. In den Fig. 1 und 3 sind die Befestigungsstücke 21 dabei am weitesten voneinander weg verschoben, so dass sie ihren größtmöglichen Abstand voneinander aufweisen, in den Fig. 2 und 4 sind die Befestigungsstücke 21 dagegen am weitesten aufeinander zu verschoben, so dass sie ihren kleinstmöglichen Abstand voneinander aufweisen.

Die als Langlöcher ausgebildeten Löcher 23 der Befestigungsstücke 21 sind bezüglich ihrer jeweiligen Längserstreckung parallel zueinander und außerdem senkrecht zur Verschieberichtung V ausgerichtet. Auf diese Weise kann eine Schraube 25 innerhalb eines jeweiligen Loches 23 entlang einer zur Einschraubrichtung und zur Verschieberichtung V senkrechten Richtung beweglich sein. Dadurch kann auch umgekehrt das Gehäuse 13 des Rahmenschlosses 11 relativ zu den gegebenenfalls an dem Zweirad eingeschraubten Schrauben 25 entlang der Richtung der Längserstreckung der Löcher 21 und somit senkrecht zur Verschieberichtung V bewegt werden. Parallel zur Verschieberichtung V kann das Gehäuse 13 des Rahmenschlosses 11 relativ zu dem Schrauben 25 zudem aufgrund der Verschiebbarkeit der Befestigungsstücke 21 bewegt werden. Aus der Überlagerung dieser beiden Beweglichkeiten ergibt sich, dass das Gehäuse 13 nach einem Einschrauben der Schrauben 25 an dem Zweirad, zumindest solange die Schrauben 25 noch nicht festgezogen sind, innerhalb eines zur Befestigungsebene parallelen zweidimensionalen Flächenbereichs, der durch die zueinander senkrechten Beweglichkeiten aufgespannt wird, noch im Wesentlichen frei positioniert werden kann. Durch Festziehen der Schrauben 25 kann die Position des Rahmenschlosses 11 dann auf die dabei eingenommene Position festgelegt werden.

Die Verschiebbarkeit der Befestigungsstücke 21 ergibt sich aus der Art ihrer Lagerung an dem Gehäuse 13. Jedes der beiden Befestigungsstücke 21, die baugleich zueinander sind, weist dabei zwei in zueinander entgegengesetzten Randseiten des jeweiligen Befestigungsstücks 21 ausgebildete Nuten 29 auf, die einen zur Verschieberichtung V parallelen Verlauf sowie im Wesentlichen dieselbe Länge aufweisen. In jedem der zwei Flanschbereiche sind zudem an dem Gehäuse 13 zwei als Blechkanten ausgebildete Stege 31 vorgesehen, die von dem Gehäuse 13 vorstehen und dabei, zumindest mit ihrem jeweiligen freien Ende, aufeinander zu weisend ausgerichtet sind. Der Abstand der zwei Stege 31 voneinander entspricht dabei im Wesentlichen dem Abstand der zwei Nuten 29 eines jeweiligen Befestigungsstücks 21 voneinander. Dadurch kann zwischen den zwei Stegen 31 ein jeweiliges Befestigungsstück 21 derart entlang der Verschiebrichtung V eingeschoben werden, dass in jede der beiden Nuten 29 des Befestigungsstücks 21 ein jeweiliger der Stege 31 eingreift. Durch dieses Eingreifen ist das Befestigungsstück 21 an dem Gehäuse 13 gelagert und dabei relativ zu dem Gehäuse 13 geführt verschiebbar.

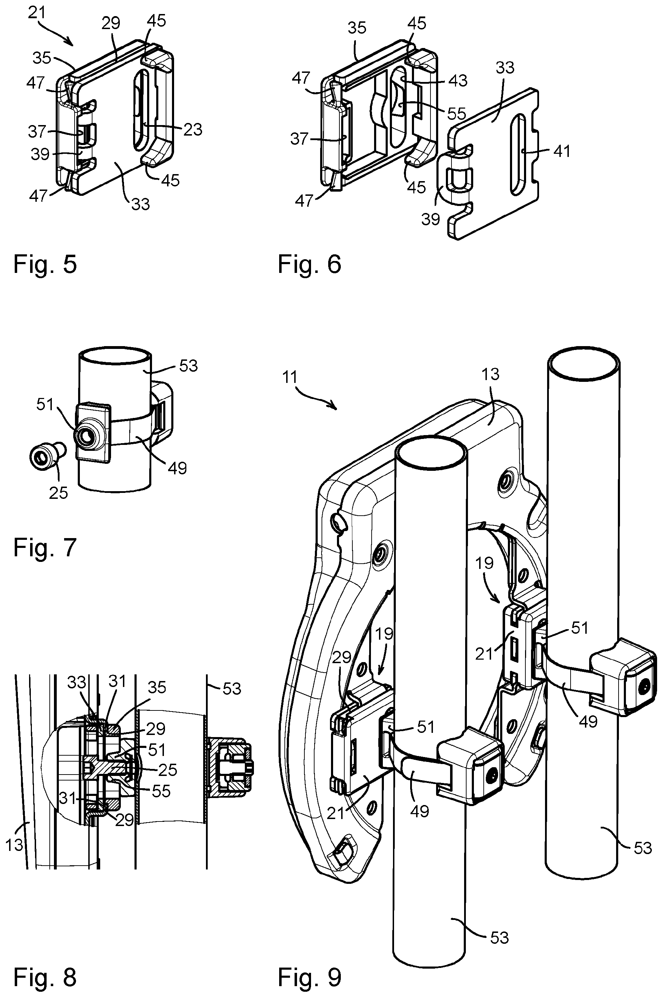

Wie insbesondere in den Fig. 5 und 6 zu erkennen ist, in denen jeweils nur eines der beiden baugleichen Befestigungsstücke 21 gezeigt ist, sind die Befestigungsstücke 21 zweiteilig ausgebildet und umfassen jeweils ein erstes Befestigungsteil 33 sowie ein zweites Befestigungsteil 35. Die beiden Befestigungsteile 33, 35 sind dazu ausgebildet, miteinander verklipst zu werden. Dazu weist das zweite Befestigungsteil 35 eine Rastaufnahme 37 auf, in der ein in den Figuren nicht zu erkennender Rastvorsprung ausgebildet ist, der eine an dem ersten Befestigungsteil 33 ausgebildete Rastlasche 39 hintergreift, wenn die Rastlasche 39 in die Rastaufnahme 37 eingesteckt wird.

Das erste Befestigungsteil 33 ist als gestanzte Blechplatte ausgebildet, während das zweite Befestigungsteil 35 als Spritzgussteil aus Kunststoff hergestellt ist. Die genannte Rückseite 27 des jeweiligen Befestigungsstücks 21, die in der Befestigungsebene liegt und in die Einschraubrichtung weist, ist an dem zweiten Befestigungsteil 35 ausgebildet (vgl. Fig. 3 und 4). Beide Befestigungsteile 33, 35 weisen jeweils ein Loch 41 bzw. 43 auf, das als Langloch ausgebildet ist. Die Löcher 41, 43 der beiden Befestigungsteile 33, 35 sind dabei bezüglich der Einschraubrichtung deckungsgleich, weisen also insbesondere dieselbe Länge und dieselbe Breite auf und sind derart angeordnet, dass sie gemeinsam das durchgehende, als Langloch ausgebildete Loch 23 des jeweiligen Befestigungsstücks 21 bilden, das ebenfalls dieselbe Länge und dieselbe Breite aufweist.

Die Nuten 29 eines jeweiligen Befestigungsstücks 21 sind zwischen den beiden Befestigungsteilen 33, 35 ausgebildet. Die die jeweilige Nut 29 entgegen der Einschraubrichtung begrenzende Seitenwand der Nut 29 wird dabei durch das erste Befestigungsteil 33 gebildet, während die die Nut 29 in die Einschraubrichtung begrenzende Seitenwand durch das zweite Befestigungsteil 35 gebildet wird. Auch ein Teil eines Bodens der Nut 29 wird durch das zweite Befestigungsteil 35 gebildet. Dabei verbleibt allerdings im Boden der Nut 29 ein Freiraum zwischen dem ersten Befestigungsteil 33 und dem zweiten Befestigungsteil 35. Dadurch sowie durch die Art, in der die beiden Befestigungsteile 33, 35 miteinander verbunden sind, weisen die Befestigungsteile 33, 35 in der Einschraubrichtung Spiel zueinander auf, so dass die Breite der Nut 29 (d. h. ihre Ausdehnung entlang der Einschraubrichtung) zu einem gewissem Grad variabel ist.

Das hat zur Folge, dass die beiden Befestigungsteile 33, 35 durch das Festziehen einer durch die Löcher 41, 43 der beiden Befestigungsteile 33, 35 hindurch an dem Zweirad eingeschraubten Schraube 25 entlang der Einschraubrichtung gegeneinander gespannt werden, so dass sich die Breite der Nut 29 verringert und der jeweilige in die Nut 29 eingreifende Steg 31 zwischen den beiden Befestigungsteilen 33, 35 eingeklemmt wird (vgl. Fig. 8). Dadurch wird die Verschiebbarkeit des jeweiligen Befestigungsstücks 21 reibschlüssig aufgehoben und das Befestigungsstück 21 in seiner Position entlang der Verschieberichtung V relativ zu dem Gehäuse 13 festgelegt. Durch das Festziehen der Schraube 25 wird zudem auch die Position der Schraube 25 entlang der Längserstreckung des jeweiligen als Langloch ausgebildeten Loches 23 des jeweiligen Befestigungsstücks 21 reibschlüssig festgelegt. Insgesamt kann das Rahmenschloss 11 somit auf die dann eingenommene Position innerhalb des genannten zweidimensionalen Flächenbereichs relativ zu dem Zweirad festgelegt sein.

An dem zweiten Befestigungsteil 35 eines jeweiligen Befestigungsstücks 21 sind Strukturen ausgebildet, die als Anschläge 45, 47 fungieren, um die Verschiebbarkeit des an dem Gehäuse 13 geführt verschiebbar gelagerten Befestigungsstücks 21 auf eine definierte Strecke zu begrenzen.

Strukturen des zweiten Befestigungsteils 35, die in den Eckbereichen der in Richtung zum jeweils anderen Befestigungsstück 21 ausgerichteten Seite des jeweiligen Befestigungsstücks 21 vorgesehen sind, bilden zwei innere Anschläge 45, mit denen das jeweilige Befestigungsstück 21 an einem jeweiligen der zwei Schenkel des Gehäuses 13 letztlich anschlägt, wenn es relativ zu dem Gehäuse 13 nach außen, d. h. in von der Mittelebene M weg weisender Richtung, verschoben wird. Das jeweilige Befestigungsstück 21 ist dadurch nicht über die in den Fig. 1 und 3 gezeigte Stellung hinaus nach außen verschiebbar.

Zudem weist das zweite Befestigungsteil 35 weitere Strukturen auf, die in den Eckbereichen der in von dem jeweils anderen Befestigungsstück 21 weg weisenden Seite des jeweiligen Befestigungsstücks 21 vorgesehen sind und zwei äußere Anschläge 47 bilden. Beide an dem jeweiligen Befestigungsstück 21 ausgebildeten Nuten 29 sind an einem der beiden Enden ihres Verlaufs durch einen jeweiligen der äußeren Anschläge 47 versperrt, so dass der in die jeweilige Nut 29 eingreifende Steg 31 gegen den äußeren Anschlag 47 letztlich anschlägt, wenn das jeweilige Befestigungsstück 21 relativ zu dem Gehäuse 13 nach innen, d. h. in Richtung auf die Mittelebene M zu, verschoben wird. Insofern bilden die äußeren Anschläge 47 Sperrabschnitte für die Nuten 29. Aufgrund des Anschlagens der Stege 31 an den äußeren Anschlägen 47 ist das jeweilige Befestigungsstück 21 (im Rahmen der üblichen Benutzung des Rahmenschlosses 11) nicht über die in den Fig. 2 und 4 gezeigte Stellung hinaus nach innen verschiebbar.

Die äußeren Anschläge 47 lassen sich aus ihrer ein Ende der jeweiligen Nut 29 versperrenden Position seitlich herausdrängen, so dass der in die Nut 29 eingreifende Steg 31 an dem jeweiligen Anschlag 47 vorbeigeführt werden kann. Auf diese Weise können die Befestigungsstücke 21 bei ihrer Montage an dem Gehäuse 13 zwischen den entsprechenden zwei Stegen 31 eingeschoben werden. Die äußeren Anschläge 47 sind dabei vorteilhafter Weise derart geformt, das sie sich bei einer Beaufschlagung entlang der Verschieberichtung V von außen in die jeweilige Nut 29 hinein vergleichsweise leicht zurückdrängen lassen, jedoch nicht bei einer dazu entgegengesetzten Beaufschlagung des jeweiligen Stegs 31 aus der Nut 29 heraus. Dazu ist auf der von der jeweiligen Nut 29 abgewandten Seite der Anschläge 47 eine Anlaufschräge ausgebildet.

Falls an dem Zweirad keine Gewindebuchsen vorgesehen sind, können entsprechende Einschraubmöglichkeiten nachgerüstet werden. Das Rahmenschloss 11 umfasst dazu zwei Bandschellen 49, die in den Fig. 7 bis 9 gezeigt sind. Jede der Bandschellen 49 weist einen Anschraubsockel 51 auf, der entlang der Längserstreckung der jeweiligen Bandschelle 49 verschiebbar an dieser angeordnet ist und nach Art einer Gewindebuchse ein Innengewinde aufweist. Bei der gezeigten Ausführungsform ist das Innengewinde für Schrauben mit metrischem ISO-Gewinde der Größe M 5 passend ausgebildet.

Die Bandschellen 49 können um eine jeweilige Hinterbaustrebe 53 eines Zweirads gebunden werden. Dabei können sie, solange sie noch nicht festgezogen sind, entlang des Verlaufs der jeweiligen Hinterbaustrebe 53 verschiebbar sein. Auf diese Weise lässt sich die Position des Anschraubsockels 51 an der jeweiligen Hinterbaustrebe 53 flexibel festlegen.

Der Anschraubsockel 51 weist (zumindest teilweise) die Form eines konischen Doms auf. Die beiden Befestigungsstücke 21 weisen jeweils eine Aufnahme 55 auf, die in der Rückseite 27 des zweiten Befestigungsteils 35 des jeweiligen Befestigungsstücks 21 ausgebildet sind. Die Aufnahmen 55 sind dabei jeweils im Bereich des Lochs 23 des jeweiligen Befestigungsstücks 21 ausgebildet, nämlich in der Mitte der Längserstreckung dieses als Langloch ausgebildeten Loches 23. Das Loch 23 wird dabei durch die jeweilige Aufnahme 55 beidseitig verbreitert. Die Form der Aufnahmen 55 ist zu der genannten Form der Anschraubsockel 51 komplementär. Dadurch kann das Gehäuse 13 des Rahmenschlosses 11 mit den Befestigungsstücken 21 derart an den am Zweirad befestigten Bandschellen 49 angeordnet werden, dass die Anschraubsockel 51 passgenau in den Aufnahmen 55 aufgenommen werden (vgl. Fig. 8).

Zwar wird durch das Aufnehmen der Anschraubsockel 51 in die Aufnahmen 55 die Beweglichkeit der Schrauben 25 innerhalb der als Langlöcher ausgebildeten Löcher 23 der beiden Befestigungsstücke 21 verhindert. Dies wird jedoch dadurch ausgeglichen, dass die Bandschellen 49 parallel zum Verlauf der Hinterbaustreben 53 beweglich sind, solange sie noch nicht festgezogen sind. Unabhängig davon, ob das Einschrauben an nachträglich an dem Zweirad angebrachten Anschraubsockeln 51 oder an ohnehin an dem Zweirad vorgesehenen Gewindebuchsen erfolgt, kann das Rahmenschloss 11 somit parallel zur Längserstreckung der Langlöcher beweglich sein, bevor es endgültig festgelegt wird. Die Verschiebbarkeit der beiden Befestigungsstücke 21 bewirkt dabei jeweils noch zusätzlich, dass das Rahmenschloss 11 entlang der Verschieberichtung V beweglich ist. Im Ergebnis weist das erfindungsgemäße Rahmenschloss 11 somit eine besonders flexible Positionierbarkeit auf, die eine weitgehend freie Positionierung innerhalb eines zweidimensionalen Flächenbereichs erlaubt.

### Bezugszeichen

- 11: Rahmenschloss
- 13: Gehäuse
- 15: Verriegelungsvorrichtung
- 17: Schlüssel
- 19: Befestigungsabschnitt
- 21: Befestigungsstück
- 23: Loch
- 25: Schraube
- 27: Rückseite
- 29: Nut
- 31: Steg
- 33: erstes Befestigungsteil
- 35: zweites Befestigungsteil
- 37: Rastaufnahme
- 39: Rastlasche
- 41: Loch des ersten Befestigungsteils
- 43: Loch des zweiten Befestigungsteils
- 45: innerer Anschlag
- 47: äußerer Anschlag
- 49: Bandschelle
- 51: Anschraubsockel
- 53: Hinterbaustrebe
- 55: Aufnahme
- M: Mittelebene
- V: Verschieberichtung

## Patentansprüche

1. Rahmenschloss (11) für ein Zweirad mit einem Gehäuse (13), einer Verriegelungsvorrichtung (15), die in dem Gehäuse (13) aufgenommen ist, sowie einem Schließbügel, der zwischen einer Offenstellung und einer Geschlossenstellung beweglich an dem Gehäuse (13) gelagert ist und in der Geschlossenstellung mittels der Verriegelungsvorrichtung (15) sperrbar ist, wobei das Rahmenschloss (11) zwei Befestigungsabschnitte (19) mit zumindest einem jeweiligen Loch (23) aufweist und dazu ausgebildet ist, an dem Zweirad befestigt zu werden, indem in einer Einschraubrichtung durch die Löcher (23) hindurch Schrauben (25) in an dem Zweirad vorgesehene Gewindebuchsen eingeschraubt werden,
wobei jeder der zwei Befestigungsabschnitte (19) als ein von dem Gehäuse (13) separat ausgebildetes Befestigungsstück (21) ausgebildet ist, in welchem das jeweilige Loch (23) ausgebildet ist,
**dadurch gekennzeichnet,**
**dass** das Befestigungsstück (21) jeweils linear entlang einer Verschieberichtung (V) geführt verschiebbar an dem Gehäuse (13) gelagert ist.

2. Rahmenschloss nach Anspruch 1,
wobei die Verschieberichtungen (V) beider Befestigungsstücke (21) zumindest im Wesentlichen parallel zueinander sind.

3. Rahmenschloss nach Anspruch 1 oder 2,
wobei das jeweilige Loch (23) als Langloch ausgebildet ist, dessen Längserstreckung quer, insbesondere senkrecht, zu der Verschieberichtung (V) des jeweiligen Befestigungsstücks (21) ist.

4. Rahmenschloss nach einem der vorstehenden Ansprüche,
wobei an dem Gehäuse (13) und/oder an den Befestigungsstücken (21) Anschläge (45, 47) ausgebildet sind, welche die Verschiebbarkeit der Befestigungsstücke (21) auf eine definierte Strecke entlang der Verschieberichtung (V) des jeweiligen Befestigungsstücks (21) beschränken.

5. Rahmenschloss nach einem der vorstehenden Ansprüche,
wobei jedes der Befestigungsstücke (21) als eine zu einer Befestigungsebene parallel ausgerichtete flächige Befestigungsplatte ausgebildet ist, und
wobei die Verschieberichtung (V) des jeweiligen Befestigungsstücks (21) parallel zu der Befestigungsebene ist.

6. Rahmenschloss nach einem der vorstehenden Ansprüche,
wobei das Gehäuse (13) eine C- oder U-Form aufweist, die bezüglich einer zu der Einschraubrichtung parallelen Mittelebene (M) zumindest im Wesentlichen spiegelsymmetrisch ist.

7. Rahmenschloss nach Anspruch 6,
wobei die Strecken, entlang welcher die beiden Befestigungsstücke (21) verschiebbar sind, bezüglich der Mittelebene (M) spiegelsymmetrisch zueinander sind.

8. Rahmenschloss nach Anspruch 6 oder 7,
wobei die Verschieberichtungen (V) beider Befestigungsstücke (21) senkrecht zu der Mittelebene (M) sind.

9. Rahmenschloss nach einem der vorstehenden Ansprüche,
wobei jedes der Befestigungsstücke (21) zumindest zweiteilig ausgebildet ist und ein erstes Befestigungsteil (33) sowie ein zweites Befestigungsteil (35) umfasst, die fest miteinander verbunden sind,
wobei das erste Befestigungsteil (33) ein Loch (41) aufweist und das zweite Befestigungsteil (35) ein Loch (43) aufweist und die Löcher (41, 43) der beiden Befestigungsteile (33, 35) derart bezüglich der Einschraubrichtung überlappend angeordnet sind, dass sie gemeinsam das zumindest eine Loch (23) des jeweiligen Befestigungsstücks (21) bilden.

10. Rahmenschloss nach einem der vorstehenden Ansprüche,
wobei jedes der Befestigungsstücke (21) eine oder mehrere zur Verschieberichtung (V) parallel ausgerichtete Nuten (29), vorzugsweise zwei entgegengesetzt zueinander angeordnete Nuten (29) , aufweist und in jede der Nuten (29) ein jeweiliger an dem Gehäuse (13) ausgebildeter Steg (31) eingreift.

11. Rahmenschloss nach den Ansprüchen 9 und 10,
wobei eine oder mehrere der Nuten (29) zwischen den beiden Befestigungsteilen (33, 35) des jeweiligen Befestigungsstücks (21) ausgebildet sind.

12. Rahmenschloss nach Anspruch 11,
wobei die Befestigungsteile (33, 35) des jeweiligen Befestigungsstücks (21) in der Einschraubrichtung Spiel zueinander aufweisen und dazu ausgebildet sind, bei an dem Zweirad befestigtem Rahmenschloss (11) von der durch das Loch (23) des Befestigungsstücks (21) hindurch eingeschraubten Schraube (25) derart entlang der Einschraubrichtung gegeneinander gespannt zu werden, dass zumindest einer der in eine jeweilige Nut (29) des Befestigungsstücks (21) eingreifenden Stege (31) des Gehäuses (13) in der jeweiligen Nut (29) eingeklemmt wird.

13. Rahmenschloss nach einem der vorstehenden Ansprüche,
wobei in jedem der Befestigungsstücke (21) in dessen in die Einschraubrichtung weisenden Seite (27) eine Aufnahme (55) zum Aufnehmen eines Anschraubsockels (51) mit Innengewinde ausgebildet ist, die das Loch (23) des jeweiligen Befestigungsstücks (21) einseitig bereichsweise verbreitert.

14. Rahmenschloss nach Anspruch 13,
wobei das Rahmenschloss (11) zwei Bandschellen (49) umfasst, die zur Befestigung an einer jeweiligen Strebe (53) des Zweirads ausgebildet sind, wobei jede der Bandschellen (49) einen an der jeweiligen Bandschelle (49) angeordneten Anschraubsockel (51) mit Innengewinde aufweist, der eine zu den in den Befestigungsstücken (21) ausgebildeten Aufnahmen (55) komplementäre Form aufweist.

15. Verfahren zum Befestigen eines Rahmenschlosses (11) nach einem der vorstehenden Ansprüche an einem Zweirad mit den folgenden Schritten:
- Verschieben der Befestigungsstücke (21) relativ zueinander, bis der Abstand der in den Befestigungsstücken (21) ausgebildeten Löcher (23) dem Abstand zweier an dem Zweirad vorgesehener Gewindebuchsen oder zweier an dem Zweirad angebrachter Anschraubsockel (51) mit Innengewinde entspricht;
- Eindrehen zweier Schrauben (25) durch die Löcher (23) hindurch in die Gewindebuchsen oder in die Anschraubsockel (51);
- Verschieben des Gehäuses (13) des Rahmenschlosses (11) relativ zu den Gewindebuchsen oder den Anschraubsockeln (51), bis eine gewünschte Position des Rahmenschlosses (11) relativ zu dem Zweirad erreicht ist;
- Festziehen der Schrauben (25) zum Festlegen der Position.

## Claims

1. A frame lock (11) for a two-wheeler, said frame lock (11) comprising a housing (13); a locking apparatus (15) which is received in the housing (13); and a closing hoop which is movably supported at the housing (13) between an open position and a closed position and which can be blocked in the closed position by means of the locking apparatus (15),
wherein the frame lock (11) has two fastening sections (19) having at least one respective hole (23) and is configured to be fastened to the two-wheeler by screwing screws (25) in a screw-in direction through the holes (23) into threaded bushings provided at the two-wheeler,
wherein each of the two fastening sections (19) is configured as a fastening piece (21) which is formed separately from the housing (13) and in which the respective hole (23) is formed,
**characterized in that**
the fastening piece (21) is in each case displaceably supported at the housing (13) linearly guided along a displacement direction (V).

2. A frame lock according to claim 1,
wherein the displacement directions (V) of both fastening pieces (21) are at least substantially in parallel with one another.

3. A frame lock according to claim 1 or claim 2,
wherein the respective hole (23) is formed as an elongate hole whose longitudinal extent is transverse, in particular perpendicular, to the displacement direction (V) of the respective fastening piece (21).

4. A frame lock according to any one of the preceding claims,
wherein abutments (45, 47) are formed at the housing (13) and/or at the fastening pieces (21), said abutments (45, 47) limiting the displaceability of the fastening pieces (21) to a defined path along the displacement direction (V) of the respective fastening piece (21).

5. A frame lock according to any one of the preceding claims,
wherein each of the fastening pieces (21) is configured as an areal fastening plate aligned in parallel with a fastening plane, and
wherein the displacement direction (V) of the respective fastening piece (21) is in parallel with the fastening plane.

6. A frame lock according to any one of the preceding claims,
wherein the housing (13) has a C shape or a U shape which is at least substantially mirror-symmetrical with respect to a center plane (M) in parallel with the screw-in direction.

7. A frame lock according to claim 6,
wherein the paths along which the two fastening pieces (21) are displaceable are mirror-symmetrical to one another with respect to the center plane (M).

8. A frame lock according to claim 6 or claim 7,
wherein the displacement directions (V) of both fastening pieces (21) are perpendicular to the center plane (M).

9. A frame lock according to any one of the preceding claims,
wherein each of the fastening pieces (21) is formed at least in two parts and comprises a first fastening part (33) and a second fastening part (35) which are fixedly connected to one another,
wherein the first fastening part (33) has a hole (41) and the second fastening part (35) has a hole (43) and the holes (41, 43) of the two fastening parts (33, 35) are arranged overlapping with respect to the screw-in direction such that they jointly form the at least one hole (23) of the respective fastening piece (21).

10. A frame lock according to any one of the preceding claims,
wherein each of the fastening pieces (21) has one or more grooves (29) aligned in parallel with the displacement direction (V), preferably two grooves (29) arranged opposite one another, and a respective web (31) formed at the housing (13) engages into each of the grooves (29).

11. A frame lock according to claims 9 and 10,
wherein one or more of the grooves (29) are formed between the two fastening parts (33, 35) of the respective fastening piece (21).

12. A frame lock according to claim 11,
wherein the fastening parts (33, 35) of the respective fastening piece (21) have a clearance with respect to one another in the screw-in direction and are configured, when the frame lock (11) is fastened to the two-wheeler, to be clamped against one another along the screw-in direction by the screw (25) screwed through the hole (23) of the fastening piece (21) such that at least one of the webs (31) of the housing (13) engaging into a respective groove (29) of the fastening piece (21) is clamped in the respective groove (29).

13. A frame lock according to any one of the preceding claims,
wherein, in each of the fastening pieces (21) in its side (27) facing in the screw-in direction, a receiver (55) for receiving a screw-on base (51) having an internal thread is formed, said receiver (55) regionally widening the hole (23) of the respective fastening piece (21) at one side.

14. A frame lock according to claim 13,
wherein the frame lock (11) comprises two band clamps (49) which are configured for fastening to a respective stay (53) of the two-wheeler,
wherein each of the band clamps (49) has a screw-on base (51) which is arranged at the respective band clamp (49), which has an internal thread, and which has a shape complementary to the receivers (55) formed in the fastening pieces (21).

15. A method of fastening a frame lock (11) according to any one of the preceding claims to a two-wheeler comprising the following steps:
- displacing the fastening pieces (21) relative to one another until the spacing of the holes (23) formed in the fastening pieces (21) corresponds to the spacing of two threaded bushings provided at the two-wheeler or to the spacing of two screw-on bases (51) which are attached to the two-wheeler and which have internal threads;
- screwing two screws (25) through the holes (23) into the threaded bushings or into the screw-on bases (51);
- displacing the housing (13) of the frame lock (11) relative to the threaded bushings or to the screw-on bases (51) until a desired position of the frame lock (11) relative to the two-wheeler is reached; and
- tightening the screws (25) to fix the position.

## Revendications

1. Antivol de cadre (11) pour un deux-roues, comprenant un boîtier (13), un dispositif de verrouillage (15) logé dans le boîtier (13), ainsi qu'un étrier de fermeture qui est monté sur le boîtier (13) de manière mobile entre une position ouverte et une position fermée et qui peut être bloqué dans la position fermée au moyen du dispositif de verrouillage (15),
dans lequel
l'antivol de cadre (11) comprend deux portions de fixation (19), ayant chacune au moins un trou (23), et est conçu pour être fixé au deux-roues du fait que des vis (25) sont vissées dans des douilles taraudées, prévues sur le deux-roues, dans une direction de vissage à travers les trous (23),
chacune des deux portions de fixation (19) est réalisée sous la forme d'une pièce de fixation (21) réalisée séparément du boîtier (13), dans laquelle est ménagé le trou respectif (23),
**caractérisé en ce que**
la pièce de fixation respective (21) est montée sur le boîtier (13) de manière à pouvoir coulisser en étant guidée linéairement le long d'une direction de coulissement (V).

2. Antivol de cadre selon la revendication 1,
dans lequel les directions de coulissement (V) des deux pièces de fixation (21) sont au moins sensiblement parallèles entre elles.

3. Antivol de cadre selon la revendication 1 ou 2,
dans lequel le trou respectif (23) est conçu comme un trou oblong dont l'extension longitudinale est transversale, en particulier perpendiculaire, à la direction de coulissement (V) de la pièce de fixation respective (21).

4. Antivol de cadre selon l'une des revendications précédentes,
dans lequel des butées (45, 47) sont formées sur le boîtier (13) et/ou sur les pièces de fixation (21), lesquelles limitent la mobilité en coulissement des pièces de fixation (21) à un trajet défini le long de la direction de coulissement (V) de la pièce de fixation respective (21).

5. Antivol de cadre selon l'une des revendications précédentes,
dans lequel chacune des pièces de fixation (21) est conçue comme une plaque de fixation plane orientée parallèlement à un plan de fixation, et la direction de coulissement (V) de la pièce de fixation respective (21) est parallèle au plan de fixation.

6. Antivol de cadre selon l'une des revendications précédentes,
dans lequel le boîtier (13) présente une forme en C ou en U qui est au moins sensiblement symétrique par rapport à un plan médian (M) parallèle à la direction de vissage.

7. Antivol de cadre selon la revendication 6,
dans lequel les trajets le long desquels les deux pièces de fixation (21) peuvent coulisser sont symétriques entre eux par rapport au plan médian (M).

8. Antivol de cadre selon la revendication 6 ou 7,
dans lequel les directions de coulissement (V) des deux pièces de fixation (21) sont perpendiculaires au plan médian (M).

9. Antivol de cadre selon l'une des revendications précédentes,
dans lequel chacune des pièces de fixation (21) est réalisée au moins en deux parties et comprend une première partie de fixation (33) et une deuxième partie de fixation (35) qui sont solidaires l'une de l'autre,
la première partie de fixation (33) présente un trou (41) et la deuxième partie de fixation (35) présente un trou (43), et les trous (41, 43) des deux parties de fixation (33, 35) sont disposés de manière à se chevaucher par rapport à la direction de vissage de telle sorte qu'ils forment ensemble ledit au moins un trou (23) de la pièce de fixation respective (21).

10. Antivol de cadre selon l'une des revendications précédentes,
dans lequel chacune des pièces de fixation (21) présente une ou plusieurs rainures (29), de préférence deux rainures (29) disposées à l'opposé l'une de l'autre, orientées parallèlement à la direction de coulissement (V), et dans chacune des rainures (29) s'engage une barrette (31) respective formée sur le boîtier (13).

11. Antivol de cadre selon les revendications 9 et 10,
dans lequel une ou plusieurs des rainures (29) sont formées entre les deux parties de fixation (33, 35) de la pièce de fixation respective (21).

12. Antivol de cadre selon la revendication 11,
dans lequel les parties de fixation (33, 35) de la pièce de fixation respective (21) présentent un jeu l'une par rapport à l'autre dans la direction de vissage et sont conçues pour, lorsque l'antivol de cadre (11) est fixé au deux-roues, être serrées l'une contre l'autre le long de la direction de vissage par la vis (25) vissée à travers le trou (23) de la pièce de fixation (21), de telle sorte que l'une au moins des barrettes (31) du boîtier (13) s'engageant dans une rainure respective (29) de la pièce de fixation (21) soit coincée dans la rainure respective (29).

13. Antivol de cadre selon l'une des revendications précédentes,
dans lequel, dans chacune des pièces de fixation (21), un logement (55) destiné à recevoir un socle de vissage (51) taraudé est formé sur son côté (27) tourné vers la direction de vissage, logement qui élargit localement, d'un côté, le trou (23) de la pièce de fixation respective (21).

14. Antivol de cadre selon la revendication 13,
dans lequel l'antivol de cadre (11) comprend deux colliers de serrage (49) conçus pour être fixés à un hauban respectif (53) du deux-roues,
chacun des colliers de serrage (49) comprend un socle de vissage (51) taraudé disposé sur le collier de serrage respectif (49), qui présente une forme complémentaire aux logements (55) formés dans les pièces de fixation (21).

15. Procédé de fixation d'un antivol de cadre (11) selon l'une des revendications précédentes sur un deux-roues, comprenant les étapes suivantes consistant à :
- faire coulisser les pièces de fixation (21) l'une par rapport à l'autre jusqu'à ce que la distance entre les trous (23) ménagés dans les pièces de fixation (21) corresponde à la distance entre deux douilles taraudées prévues sur le deux-roues ou entre deux socles de vissage (51) taraudés montés sur le deux-roues ;
- visser deux vis (25) dans les douilles taraudées ou dans les socles de vissage (51) à travers les trous (23) ;
- faire coulisser le boîtier (13) de l'antivol de cadre (11) par rapport aux douilles taraudées ou aux socles de vissage (51) jusqu'à ce qu'une position souhaitée de l'antivol de cadre (11) par rapport au deux-roues soit atteinte ;
- serrer les vis (25) pour fixer la position.
